# EUROPEAN PATENT APPLICATION

(11) **EP 3 998 561 A1**
(43) Date of publication of application: **18.05.2022**
(21) Application number: 20836343.2
(22) Date of filing: 08.07.2020
(51) Int. Cl.: G06Q 10/06

(54) **VALIDATION ADJUSTMENT METHOD AND APPARATUS FOR FLIGHT VALIDATION BATCH**

(30) Priority: 10.07.2019 CN 201910620187
(71) Applicant: Travelsky Technology Limited, Beijing 101318 (CN)
(72) Inventor: ZHAO, Yu, Beijing 101318 (CN); ZHANG, Aiai, Beijing 101318 (CN); XU, Xiaojun, Beijing 101318 (CN); BI, Zheng, Beijing 101318 (CN)
(74) Representative: Detken, Andreas
(86) International application number: PCT/CN2020/100804
(87) International publication number: WO 2021/004473

(57) **Abstract**

Disclosed is a validation adjustment method for a flight validation batch, the method comprising: grouping multiple determined flights to be validated, and separating generated flight groups in batches; adding generated flight validation batches to corresponding validation queues, and acquiring a flight validation batch in a validation queue; determining whether the currently acquired flight validation batch meets the condition for the execution of a preset automatic validation instruction, if the condition is met, executing the preset automatic validation instruction, and determining whether there is an abnormality in the execution of the preset automatic validation instruction; when there is no abnormality in the execution of the preset automatic validation instruction, the currently acquired validation batch is successfully validated; and when there is an abnormality in the execution of the preset automatic validation instruction, adding the currently acquired flight validation batch to the tail of the corresponding validation queue. By means of the method, the sequence of flight validation batches can be dynamically adjusted, and the flight adjustment flexibility of a system can be improved, thus improving the flight adjustment efficiency of the system.

## Description

This application claims priority to Chinese Patent Application No. 201910620187.8, titled "VALIDATION ADJUSTMENT METHOD AND APPARATUS FOR FLIGHT VALIDATION BATCH", filed on July 10, 2019 with the China National Intellectual Property Administration (CNIPA), which is incorporated herein by reference in its entirety.

### FIELD

The present disclosure relates to the technical field of flight management, and in particular to a validation adjustment method and apparatus for flight validation batches.

### BACKGROUND

With the rapid development of economy, air transportation industry develops quickly and the number of flight plans of various airline companies has greatly increased. In order to meet various demands from consumers, it is necessary to update information of each flight and make an adjustment on the flight. The adjustment on flight plans of an airline company is made through a flight management system.

During an adjustment on a flight plan, a process from beginning the adjustment on flight plan to finishing the adjustment and allowing air tickets to be sold to consumers is known as a flight validation. It is found that in a conventional method for flight validation, when making an adjustment on flight validation using a conventional flight management system, the adjustment is made in accordance with a sequence of to-be-validated flights in a validation channel; and an abnormal to-be-validated flight, when appears, may keep occupying the validation channel in a system until the problem is solved. Such adjustment method cannot adjust the sequence of the to-be-validated flights dynamically, thereby significantly reducing an efficiency of flight adjustment in the flight management system.

### SUMMARY

In view of the above, a validation adjustment method for flight validation batches is provided in embodiments of the present disclosure, which can dynamically adjust a validation sequence of flight validation batches, thereby improves an efficiency of flight adjustment in the flight management system and improves a utilization rate of the validation channels in the flight management system.

A validation adjustment apparatus for flight validation batches is further provided in the present disclosure, which is used to ensure a practical application of the above method in practice.

To realize the above objectives, technical solutions are provided by the embodiments of the present disclosure as follows.

A validation adjustment method for flight validation batches, including:
determining multiple currently to-be-validated flights, and grouping, according to a preset grouping strategy, the multiple to-be-validated flights to generate multiple flight groups, where each of the multiple flight groups includes at least one of the to-be-validated flights;
for each of the flight groups,
   determining a validation priority of each of the to-be-validated flights in the fight group,
   batching the to-be-validated flights with a same validation priority into a same flight validation batch, to generate multiple flight validation batches, and
   determining, for each of the flight validation batches, the validation priority of the to-be-validated flights in the flight validation batch as a validation priority of the flight validation batch;
for each of the flight groups, adding the flight group into a pre-created validation queue corresponding to the flight group, and
for each of validation queues having added the flight groups,
   sorting all the flight validation batches in the validation queue according to a preset priority sorting strategy, and
   determining sorted priorities of all the flight validation batches in the validation queue;
   for each of the validation queues having added the flight groups,
      acquiring the flight validation batches from the validation queue sequentially according to the sorted priorities from high to low, and determining whether a currently acquired flight validation batch meets a condition for a preset automatic validation instruction; and
      in a case where the currently acquired flight validation batch meets the condition for executing the preset automatic validation instruction,
         executing the preset automatic validation instruction, and determining whether there is an abnormality in executing the preset automatic validation instruction;
         adding the currently acquired flight validation batch to a tail of the validation queue if it is determined that there is an abnormality in executing the preset automatic validation instruction; and
         determining that the currently acquired flight validation batch is validated successfully if it is determined that there is no abnormality in executing the preset automatic validation instruction.

In the method according to an alternative embodiment, the grouping, according to a preset grouping strategy, the multiple to-be-validated flights to generate multiple flight groups includes:
determining a master office for each of the to-be-validated flights; and
grouping, based on master offices for the to-be-validated flights, the to-be-validated flights with a same master office into a same group, to generate the flight groups corresponding to the master offices.

In the method according to an alternative embodiment, for each of the flight groups, adding the flight group into a pre-created validation queue corresponding to the flight group, and for each of validation queues having added the flight groups, sorting all the flight validation batches in the validation queue according to a preset priority sorting strategy, and determining sorted priorities of all the flight validation batches in the validation queue includes:
for each of the flight groups, determining a master office for the flight group and adding the flight group into a validation queue corresponding to the master office;
for each of the validation queues having added the flight groups,
   determining a validation priority and generation time for each of the flight validation batches in the validation queue,
   sorting the flight validation batches according to the validation priority from high to low,
   sorting, for the flight validation batches having a same validation priority, the flight validation batches having the same validation priority in a chronological order of the generation time, to determine the sorted priorities of all the flight validation batches in the validation queue.

In the method according to an alternative embodiment, the determining whether a currently acquired flight validation batch meets a condition for a preset automatic validation instruction includes:
acquiring batch information of the currently acquired flight validation batch;
determining, based on the batch information, whether the currently acquired flight validation batch is a new flight batch; and
in a case where the currently acquired flight validation batch is the new flight batch,
   executing a preset polling instruction, and determining whether there is an abnormality in executing the preset polling instruction,
   determining that the flight validation batch meets the condition for executing the preset automatic validation instruction if there is no abnormality in executing the preset polling instruction, and
   adding the flight validation batch to the tail of the validation queue if there is an abnormality in executing the preset polling instruction.

In the method according to an alternative embodiment, the determining whether a currently acquired flight validation batch meets a condition for a preset automatic validation instruction includes:
acquiring batch information of the currently acquired flight validation batch;
determining, based on the batch information, whether the currently acquired flight validation batch is a new flight batch; and
in a case where the currently acquired flight validation batch is not a new flight batch,
for each of the to-be-validated flights in the currently acquired flight validation batch, determining flight information of the to-be-validated flight, and comparing the flight information of the to-be-validated flight with corresponding preset flight information, to determine whether the flight information of each of the to-be-validated flights in the currently acquired flight validation batch is consistent with the corresponding preset flight information;
determining that the flight validation batch is validated successfully, if the flight information of each of the to-be-validated flights in the currently acquired flight validation batch is consistent with the corresponding preset flight information, and
determining that the currently acquired flight validation batch meets the condition for executing the preset automatic validation instruction, if there is at least one of the to-be-validated flights in the currently acquired flight validation batch whose flight information is not consistent with the corresponding preset flight information.

A validation adjustment apparatus for flight validation batches, including:
a determining unit, configured to determine multiple currently to-be-validated flights, and group, according to a preset grouping strategy, the multiple to-be-validated flights to generate multiple flight groups, where each of the multiple flight groups includes at least one of the to-be-validated flights;
a generating unit, configured to:
   for each of the flight groups,
   determine a validation priority of each of the to-be-validated flights in the fight group,
   batch the to-be-validated flights with a same validation priority into a same flight validation batch, to generate multiple flight validation batches, and
   determine, for each of the flight validation batches, the validation priority of the to-be-validated flights in the flight validation batch as a validation priority of the flight validation batch;
a sorting unit, configured to:
   for each of the flight groups, add the flight group into a pre-created validation queue corresponding to the flight group, and
   for each of validation queues having added the flight groups,
      sort all the flight validation batches in the validation queue according to a preset priority sorting strategy, and
      determine sorted priorities of all the flight validation batches in the validation queue;
a judging unit, configured to:
   for each of the validation queues having added the flight groups,
   acquire the flight validation batches from the validation queue sequentially according to the sorted priorities from high to low, and determine whether a currently acquired flight validation batch meets a condition for a preset automatic validation instruction; and
an executing unit, configured to:
   in a case where the currently acquired flight validation batch meets the condition for executing the preset automatic validation instruction,
   execute the preset automatic validation instruction, and determine whether there is an abnormality in executing the preset automatic validation instruction;
   add the currently acquired flight validation batch to a tail of the validation queue if it is determined that there is an abnormality in executing the preset automatic validation instruction; and
      determine that the currently acquired flight validation batch is validated successfully if it is determined that there is no abnormality in executing the preset automatic validation instruction.

In the apparatus according to an alternative embodiment, the determining unit includes:
a first determining subunit, configured to determine a master office for each of the to-be-validated flights; and
a grouping subunit, configured to group, based on master offices for the to-be-validated flights, the to-be-validated flights with a same master office into a same group, to generate the flight groups corresponding to the master offices.

In the apparatus according to an alternative embodiment, the sorting unit includes:
a first adding subunit, configured to: for each of the flight groups, determine a master office for the flight group and add the flight group into a validation queue corresponding to the master office;
a second determining subunit, configured to:
   for each of the validation queues having added the flight groups,
   determine a validation priority and generation time of each of the flight validation batches in the validation queue, and
   sort the flight validation batches according to the validation priority from high to low; and
a sorting subunit, configured to sort, for the flight validation batches having a same validation priority, the flight validation batches having the same validation priority in a chronological order of the generation time, to determine the sorted priorities of all the flight validation batches in the validation queue.

In the apparatus according to an alternative embodiment, the judging unit includes:
a first acquiring subunit, configured to acquire batch information of the currently acquired flight validation batch;
a first judging subunit, configured to determine, based on the batch information, whether the currently acquired flight validation batch is a new flight batch; and
a first executing subunit, configured to:
   in a case where the currently acquired flight validation batch is the new flight batch,
   execute a preset polling instruction, and determine whether there is an abnormality in executing the preset polling instruction,
   determine that the flight validation batch meets the condition for executing the preset automatic validation instruction if there is no abnormality in executing the preset polling instruction, and
   add the flight validation batch to the tail of the validation queue if there is an abnormality in executing the preset polling instruction.

In the apparatus according to an alternative embodiment, the judging unit includes:
a second acquiring subunit, configured to acquire batch information of the currently acquired flight validation batch;
a second judging subunit, configured to determine, based on the batch information, whether the currently acquired flight validation batch is a new flight batch; and
a second executing subunit, configured to:
   in a case where the currently acquired flight validation batch is not a new flight batch,
   for each of the to-be-validated flights in the currently acquired flight validation batch, determine flight information of the to-be-validated flight, and compare the flight information of the to-be-validated flight with corresponding preset flight information, to determine whether the flight information of each of the to-be-validated flights in the currently acquired flight validation batch is consistent with the corresponding preset flight information;
   determine that the flight validation batch is validated successfully, if the flight information of each of the to-be-validated flights in the currently acquired flight validation batch is consistent with the corresponding preset flight information, and
   determine that the currently acquired flight validation batch meets the condition for executing the preset automatic validation instruction, if there is at least one of the to-be-validated flights in the currently acquired flight validation batch whose flight information is not consistent with the corresponding preset flight information.

Compared with the conventional technology, the present disclosure has the following advantages.

In the validation adjustment method for flight validation batches according to the embodiments of the present disclosure, multiple currently to-be-validated flights are determined, and the multiple to-be-validated flights are grouped based on a preset grouping strategy and batched based on a preset batching strategy, to generate validation batches in the generated flight groups; the validation batches are added, according to a preset adding strategy, respectively to pre-created validation queues; the validation batch is acquired from the validation queue and it is determined whether the currently acquired validation batch meets a condition for executing a preset automatic validation instruction; in a case where the currently acquired validation batch meets the condition for executing the preset automatic validation instruction, the preset automatic validation instruction is executed and it is determined whether there is an abnormality in executing the preset automatic validation instruction; the currently acquired validation batch is validated successfully if there is no abnormality in executing the preset automatic validation instruction; and the currently acquired validation batch is added to the tail of the validation queue if there is an abnormality in executing the preset automatic validation instruction. By applying the present disclosure, a sequence of the flight validation batches can be dynamically adjusted, thereby improving a flexibility of the system in adjusting the flight validation and improving an efficiency of flight validation of the system.

### BRIEF DESCRIPTION OF THE DRAWINGS

For a clearer illustration of technical solutions in embodiments of the present disclosure or in the conventional technology, drawings used in the description of the embodiments or the conventional technology are described briefly hereinafter. Apparently, the drawings described in the following illustrate only embodiments of the present disclosure, and other drawings may also be obtained by those ordinarily skilled in the art based on these drawings without any creative effort.
Figure 1 is a flowchart of a flight adjustment method according to an embodiment of the present disclosure;
Figure 2 is a flowchart of a flight adjustment method according to another embodiment of the present disclosure; and
Figure 3 is a structural diagram of a flight adjustment apparatus according to an embodiment of the present disclosure.

### DETAILED DESCRIPTION

The technical solutions in the embodiments of the present disclosure are described clearly and completely in conjunction with the drawings of the embodiments of the disclosure hereinafter. It is apparent that the described embodiments are only some, rather than all, embodiments of the present disclosure. Any other embodiments obtained by those skilled in the art based on the embodiments in the present disclosure without any creative effort shall fall within the protection scope of the present disclosure.

In this specification, terms "include", "comprise" or any other variants thereof are intended to be non-exclusive. Therefore, a process, method, article or device including a series of elements includes not only these elements but also elements that are not enumerated, or elements that are inherent to the process, method, article or device. Unless expressively limited otherwise, an element limited by "comprising/including a(n) ..." does not exclude existence of another identical element in such process, method, article or device including the element.

The present disclosure may be applied to various universal or dedicated computing device environments or configurations, such as personal computers, server computers, multi-processor devices, distributed computing environment including any of the above devices or equipment, and the like.

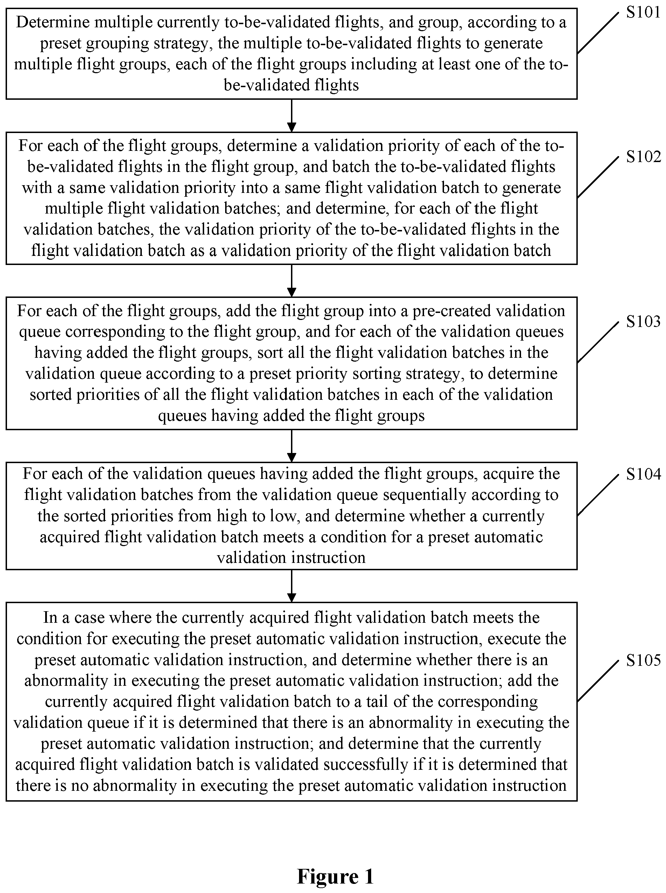

A validation adjustment method for flight validation batches is provided in an embodiment of the present disclosure. The method may be applied to a flight adjustment system, and may be performed by a server in the flight adjustment system or a computer processor in the flight adjustment system. It should be noted that the flight adjustment system may be an Inventory Control System (ICS). Figure 1 shows a flowchart of the method, including steps S101 to S105.

In S101, multiple currently to-be-validated flights are determined, and the multiple to-be-validated flights are grouped according to a preset grouping strategy, to generate multiple flight groups. Each of the flight groups includes at least one of the to-be-validated flights.

In the method according to an embodiment of the present disclosure, the currently to-be-validated flights selected by users of various airline companies are received. It should be noted that after receiving the to-be-validated flights, it is required to verify an authority of each of the to-be-validated flights. A specific verification process is as follows.

An authority of each of the currently to-be-validated flights is determined. For each of the to-be-validated flights, it is determined whether a preset authority of an aviation user corresponding to the to-be-validated flight includes the authority of the to-be-validated flight. If the authority of the to-be-validated flight is included in the authority of the corresponding aviation user, then it is determined that the authority of the to-be-validated flight is verified. If the authority of the to-be-validated flight is not included in the authority of the corresponding aviation user, then it is determined that the authority of the to-be-validated flight is not verified, and the to-be-validated flight is marked with an abnormality flag.

It should be noted that a master office may be applied during the authority verification. For example, assuming that the authority of the to-be-validated flight A is a master office2, and the authority of the aviation user corresponding to the to-be-validated flight A includes master office2 and master office3. The authority of the aviation user corresponding to the to-be-validated flight A includes the authority of the to-be-validated flight, and then the authority of the to-be-validated flight A is verified. The aviation user may have one or more authorities.

Multiple currently to-be-validated flights are determined, and flight information of the multiple to-be-validated flights is acquired. The multiple to-be-validated flights are grouped based on the flight information and a present grouping strategy, to generate multiple flight groups. Each of the flight groups includes at least one of the to-be-validated flights.

In S102, for each of the flight groups, a validation priority of each of the to-be-validated flights in the flight group is determined, the to-be-validated flights with a same validation priority are batched into a same flight validation batch to generate multiple flight validation batches, and the validation priority of the to-be-validated flights in each of the flight validation batches is determined as a validation priority of the flight validation batch.

In the method according to an embodiment of the present disclosure, after grouping the multiple to-be-validated flights to generate multiple flight groups, the validation priority of each of the to-be-validated flights is determined based on the acquired flight information of the to-be-validated flight; based on validation priorities, the to-be-validated flights with a same validation priority are batched into a same flight validation batch, and the validation priority of the to-be-validated flights in a same flight validation batch is determined as the validation priority of the flight validation batch, so that multiple flight validation batches are generated. It should be noted that each of the flight validation batches includes up to 24 flight numbers and 500 flight plans.

In S103, for each of the flight groups, the flight group is added into a pre-created validation queue corresponding to the flight group, and for each of validation queues having added the flight groups, all the flight validation batches in the validation queue are sorted according to a preset priority sorting strategy, to determine sorted priorities of all the flight validation batches in the validation queue.

In the method according to an embodiment of the present disclosure, the generated flight groups are added respectively to corresponding pre-created validation queues. The number of the validation queues is the same as the number of validation channels in the system, and the validation queues have one-to-one correspondence with the validation channels. For each of the validation queues having added the flight groups, the validation priority and generation time of each of the flight validation batches in the validation queue are determined, and all the flight validation batches are sorted in accordance with the preset priority sorting strategy based on the validation priority and the generation time of each of the flight validation batches, so as to determine the sorted priorities of all the flight validation batches in the validation queue. It should be noted that the flight validation batch positioned further forward in the validation queue has a higher sorted priority.

In S104, for each of the validation queues having added the flight groups, the flight validation batches are acquired from the validation queue sequentially according to an order of the sorted priorities from high to low, and it is determined whether a currently acquired flight validation batch meets a condition for a preset automatic validation instruction.

In the method according to an embodiment of the present disclosure, for each of the validation queues in which the flight groups have been added and all the flight validation batches have been sorted, the flight validation batches in the validation queue are acquired one by one in an order of the sorted priorities from high to low, and it is determined whether the currently acquired flight validation batch meets the condition for the preset automatic validation instruction. A corresponding operation is performed based on a determination result.

In S105, in a case where the currently acquired flight validation batch meets the condition for executing the preset automatic validation instruction, the preset automatic validation instruction is executed and it is determined whether there is an abnormality in executing the preset automatic validation instruction. If it is determined that there is an abnormality in executing the preset automatic validation instruction, the currently acquired flight validation batch is added to the tail of the corresponding validation queue. If it is determined that there is no abnormality in executing the preset automatic validation instruction, the currently acquired flight validation batch is validated successfully.

In the method according to an embodiment of the present disclosure, in a case where the acquired flight validation batch meets the condition for executing the preset automatic validation instruction, the preset automatic validation instruction is executed and it is determined whether there is an abnormality in executing the automatic validation instruction.

The currently acquired flight validation batch is validated successfully if there is no abnormality in executing the automatic validation instruction; or, the currently acquired flight validation batch is added to the tail of the corresponding validation queue if there is an abnormality in executing the automatic validation instruction. It should be noted that the flight validation batches are continuously acquired from the validation queue, and it is determined, each time the flight validation batch is acquired, whether the flight validation batch meets the condition for the preset automatic validation instruction, and the corresponding operation is performed based on the determination result. This process repeats until there is no validation batch in the validation queue.

With the method according to the embodiments of the present disclosure, currently to-be-validated flights are determined, and the to-be-validated flights are grouped based on a preset grouping strategy and are batched based on a preset batching strategy to generate flight validation batches. The flight validation batches are added, according to a preset adding strategy, respectively to corresponding pre-created validation queues. For each of the flight validation batches in each of the validation queues, the flight validation batch is acquired from the validation queue and it is determined whether the flight validation batch meets a condition for executing a preset automatic validation instruction. In a case where the flight validation batch meets the condition for executing the preset automatic validation instruction, the preset automatic validation instruction is executed, and it is determined whether there is an abnormality in executing the preset automatic validation instruction. The flight validation batch is validated successfully if there is no abnormality in executing the preset automatic validation instruction. The flight validation batch is added to the tail of the corresponding validation queue if there is an abnormality in executing the preset automatic validation instruction. The flight validation batches are acquired continuously from the validation queue and the validation operation is performed correspondingly, until there is no validation batch in the validation queue, and the validation process terminates. By applying the present disclosure, a validation sequence of to-be-validated flights may be dynamically adjusted, thereby improving a flexibility of the system in adjusting the flight validation batches and improving an efficiency of flight validation of the system.

In the method according to an embodiment of the present disclosure, in a process of adjusting the flight validation batches, it is required to perform a grouping processing and a batching processing on the to-be-validated flights, and the flight validation batches generated after the grouping process and the batching process are added respectively to corresponding validation queues. The specific process is as follows.

A master office for each of the to-be-validated flights is determined. Based on master offices for the to-be-validated flights, the to-be-validated flights with a same master office are grouped into a same group, to generate flight groups corresponding to the master offices. For each of the flight groups, the flight group is added to a validation queue corresponding to the master office of the flight group. For each of the validation queues having added the flight groups, a validation priority and generation time of each of the flight validation batches are determined, and the flight validation batches are sorted according to an order of the validation priorities from high to low. For the flight validation batches having a same validation priority, the flight validation batches with the same validation priority are sorted in a chronological order of the generation time, to determine a sorted priority of each of the flight validation batches in each of the validation queues having added the flight groups.

It should be noted that, the master office is determined for each of the to-be-validated flights, and the to-be-validated flights corresponding to a same master office are grouped into a same group, to generate flight groups corresponding to the master offices. For each of the flight groups, the flight group is added to the validation queue corresponding to the master office of the flight group. A validation priority of each of the to-be-validated flights in each of the validation queues having added the flight groups is determined. The validation priorities from high to low may include: ASM new flight, ASM not-new flight, SSM new flight, and SSM not-new flight. The to-be-validated flights with a same validation priority are batched into a same validation batch, and the validation priority of the to-be-validated flights in the validation batch is determined as the validation priority of the validation batch, so as to generate flight validation batches with different validation priorities. It should be noted that different validation batches in a same flight group are validated sequentially, and identical validation batches in different flight groups may be validated in parallel.

For each of the validation queues having added the flight groups, a validation priority and generation time of each of the flight validation batches in the validation queue are determined, and the flight validation batches are sorted in an order of the validation priorities from high to low. For the flight validation batches having a same validation priority, the flight validation batches with the same validation priority are sorted in a chronological order of the generation time, to determine a sorted priority of each of the flight validation batches in the validation queue.

In the method according to an embodiment of the present disclosure, the to-be-validated flights are effectively classified by grouping and batching the to-be-validated flights, to generate flight validation batches. The flight validation batches are sorted in a validation queue based on the validation priorities of the flight validation batches, to determine the sorted priority of each of the flight validation batches in the validation queue. The flight validation batches are acquired sequentially according to the sorted priorities from high to low for a validation operation, so as to improve the flexibility of the flight management system in adjusting the flight validation batches. During the validation operation, it is required to execute a preset automatic validation instruction and determine whether a flight validation batch meets a condition for executing the preset automatic validation instruction. A specific process is as follows.

In S201, batch information of a currently acquired flight validation batch is acquired.

In the method according to an embodiment of the present disclosure, when a flight validation batch in a validation queue is acquired, batch information of the currently acquired flight validation batch is determined. The batch information includes a batch type, a sorted priority, a quantity of flight numbers, a quantity of planned flights, and the like, of the flight validation batch.

In S202, it is determined whether the currently acquired flight validation batch is a new flight batch. The process proceeds to S203 if the currently acquired flight validation batch is a new flight batch; or the process proceeds to S204 if the currently acquired flight validation batch is not a new flight batch.

In the method according to an embodiment of the present disclosure, the batch type of the currently acquired flight validation batch is determined based on the batch information of the flight validation batch. The batch type of the flight validation batch may be a new flight batch or a not-new flight batch. The new flight batch may include an ASM new flight batch and an SSM new flight batch. The not-new flight batch may include an ASM not-new flight batch and an SSM not-new flight batch. The process proceeds to S203 if the current flight validation batch is a new flight batch, and the process proceeds to S204 if the current flight validation batch is not a new flight batch.

In S203, it is determined whether all validation channels are free. The process proceeds to S205 if the validation channels are all free, and the process proceeds to S207 if the validation channels are not all free.

In the method according to an embodiment of the present disclosure, if the currently acquired flight validation batch is a new flight batch, a preset polling instruction is executed to query whether validation channels in the system are all free. If it is found that the validation channels in the system are all free, it indicates the execution of the preset polling instruction is normal, and the process proceeds to S205. If it is found that the validation channels in the system are not all free, it indicates that there is an abnormality in executing the preset polling instruction, and the process proceeds to S207.

In a preferred embodiment, executing the preset polling instruction may specifically be that executing the SCQ instruction by the ICS system according to a preset rule. If a returned result is *NO SCHEDULE CHANGE ACTIVE OR QUEUED,* it indicates that the validation channels in the system are all free, and the process proceeds to S205; otherwise, the process proceeds to S207.

It should be noted that the preset rule may be that if the returned result of executing the SCQ instruction is not *NO SCHEDULE CHANGE ACTIVE OR QUEUED,* the SCQ instruction is to be executed repeatedly within a preset time, until channels are all free or a maximum repeat-execution time is reached. During repeat execution of the SCQ instruction, an execution frequency and the maximum repeat-execution time may be set based on an actual situation. For example, the repetition frequency is set to 2 times per second, and the maximum repeat-execution time is set to 5min. If the validation channels are still not all free after a last execution of the SCQ instruction, it indicates there is an abnormality in executing the polling instruction, and the new flight validation batch is queued to the tail of the corresponding validation queue, and a validation operation is given priority to the other flight validation batches in the validation queue. If the validation queue includes only one new flight validation batch, the validation operation for the validation batch is repeated.

In S204, it is determined whether to remain flight information of each of the to-be-validated flights in the flight validation batch unchanged. If it is determined to remain the flight information of each of the to-be-validated flights in the flight validation batch unchanged, the process proceeds to S206; and if the flight information of any of the to-be-validated flights in the flight validation batch is to be changed, the process proceeds to S205.

In the method according to an embodiment of the present disclosure, in a case where the currently acquired flight validation batch is not a new flight batch, for each of the to-be-validated flights in the flight validation batch, the flight information of the to-be-validated flight is acquired and compared with corresponding preset flight information, to determine whether to remain the flight information of each of the to-be-validated flights in the flight validation batch unchanged. In a case where the flight information of each of the to-be-validated flights is consistent with the corresponding preset flight information, it is determined that the flight information of each of the to-be-validated flights in the currently acquired flight validation batch is not to be changed. When comparing the flight information of a to-be-validated flight with the corresponding preset flight information, the flight information may be traversed and each information of the flight information is compared with each information of the corresponding preset flight information, or corresponding information between the flight information and the preset flight information is compared with each other. If the flight information of the to-be-validated flight is all consistent with the corresponding preset flight information, the flight information of the to-be-validated flight is not to be changed. If the flight information of all the to-be-validated flights in the acquired flight validation batch is not to be changed, the process proceeds to S206; or otherwise, the process proceeds to S205.

It should be noted that specific content in comparing the flight information of the to-be-validated flight with the corresponding preset flight information is listed as follows:
basic flight information: airline company, flight number, flight suffix, flight start date, flight end date, and flight schedule;
attribute information of a flight level: e-ticket identification, night flight identification, domestic/international identification, and flight T5 items;
basic information of a flight leg: departure terminal, arrival terminal, flight leg sequence, departure time of the flight leg, departure date offset of the flight leg, arrival time of the flight leg, arrival date offset of the flight, aircraft and class sequence of the flight leg, sales layout for the flight leg, and aircraft type;
attribute information of a flight leg: travel distance, meals, safe flight identification, and in-flight entertainment;
code sharing information: partner airline company, flight number, flight number suffix, class correspondence table number, and virtual flight identification;
basic information of a flight segment: starting terminal of the flight segment, and arrival terminal of the flight segment;
attribute information of a flight segment: automatic alternate confirmation identification.

It should be noted that the flight information of the to-be-validated flight is to be changed if at least one information item in the flight information of the to-be-validated flight is different from the corresponding preset flight information.

In S205, it is determined whether there is an abnormality in executing the preset automatic validation instruction. The process proceeds to S206 if there is no abnormality in executing the automatic validation instruction, and the process proceeds to S207 if there is an abnormality in executing the automatic validation instruction.

In the method according to an embodiment of the present disclosure, if the currently acquired flight validation batch is a new flight batch and there is no abnormality in executing the polling instruction, it is determined that the acquired flight validation batch meets the condition for executing the preset automatic validation instruction; or if the currently acquired flight validation batch is not a new flight batch and the flight information of some of the to-be-validated flights in the flight validation batch is to be updated, it is determined that the acquired flight validation batch meets the condition for executing the preset automatic validation instruction.

In a case where the flight validation batch meets the condition for the preset automatic validation instruction, the preset automatic validation instruction is executed, and it is determined whether there is an abnormality in executing the preset automatic validation instruction. The automatic validation instruction includes multiple instructions, and a determination is made on the executed instructions. A specific determination process is described below, including step 1) to step 7).

Step 1): Executing an SC:T command to update TCARD information. If an ICS response is *ACCEPTED,* then the SC:T command is executed successfully and the process proceeds to step 2); otherwise, the current flight validation batch is placed into an abnormality flow.

It should be noted that if the currently acquired flight validation batch is a new flight batch, the SC:T command is executed for each of the to-be-validated flights in the flight validation batch. The process proceeds to step 2) if responses from the to-be-validated flights executing the SC:T command are all *ACCEPTED;* or otherwise, the current flight validation batch is placed into the abnormality flow. In a case where the currently acquired flight validation batch is not a new flight batch, the SC:T command is executed for the to-be-validated flights in the flight validation batch whose flight information is to be changed. The process proceeds to step 2) if responses from the to-be-validated flights executing the SC:T command are all *ACCEPTED;* or otherwise, the current flight validation batch is placed into the abnormality flow.

Step 2): Executing an ST:RT/flight number/batch number command to generate a route. For example, the command may be ST:RT/CA1500/123456, where CA1500 indicates a flight number and 123456 indicates a batch number. It should be noted that if the length of the ST:RT command exceeds 80 characters, it is necessary to begin a new line and add an en dash (-) at the head of the new line. Execution of this command is successful and the process proceeds to step 3) if the ICS response is *ACCEPTED* or *SCHEDULE CHANGE QUEUED;* or otherwise, the current flight validation batch is placed into the abnormality flow.

Step 3): Executing an SCQ: master office command to determine whether the ST: RT is completed. The determination process is described below.
a) If a content returned by the ICS system includes: *SCHEDULE BUILD COMPLETE, PROT NOT RUNNING,* it means that the ST:RT command is completed, and the process proceeds to step 4).
b) If the content returned by the ICS system includes: *POSSIBLE SYSTEM ERROR, PLEASE CONTACT HELP DESK,* it means that the ST:RT fails.
c) If the ST:RT fails and an ST:VT command is executed in step 3) less than twice, the ST:VT command is written by the system into the ICS, and step 3) is then repeated.
d) If the ST:RT command is not completed, step 3) is repeated until the ST:RT command is completed or a maximum repeat-execution time is reached.

It should be noted that a repetition frequency and a maximum repeat-execution time are set for the execution of the ST:RT command. The repetition frequency and the maximum repeat-execution time may be configured based on an actual condition. For example, for the current ICS system, the repetition frequency is 2 times per second, and the maximum repeat-execution time is 1 hour. If the ST:RT command still have not been completed when the maximum repeat-execution time is reached, the current flight validation batch is placed into the abnormality flow.

Step 4): Executing an ST:Q/PROT command or an ST:R/PROT command. It should be noted that the two commands are selected when an airline user selects a to-be-validated flight. When one of the ST:Q/PROT command and the ST:R/PROT command is executed by the ICS system, the command is executed successfully if a response from the ICS system is *ACCEPTED,* then the process proceeds to step 5); or otherwise, the current flight validation batch is placed into the abnormality flow.

Step 5): Executing an SCQ: master office command, to determine whether the ST: Q/PROT command or the ST:R/PROT command is completed. A specific determination process is described below.
a) If a content returned by the ICS system includes: *PASSENGER PROTECTION SUSPENDED FOR Flight,* it means that the ST:Q/PROT command or the ST:R/PROT command is completed, and the process proceeds to step 6).
b) If the content returned by the ICS system includes: *POSSIBLE SYSTEM ERROR, PLEASE CONTACT HELP DESK,* it means that the ST:RT fails, the ST:VT command is written by the system into the ICS, and step 5) is repeated.
   It should be noted that the ST:VT command may be executed twice at most. If the condition for executing the ST:VT command is met again after the ST:VT command has been executed twice cumulatively, the step 5) is repeated.
c) If none of the above two cases a) and b) appears, step 5) is repeated. It should be noted that when the ICS system executes the command, a repetition frequency and a duration for the command execution may be set based on an actual situation. For example, a current repetition frequency of the ICS system is set to 2 times per second, and the duration is set to 1 hour. If the ST:Q/PROT command or the ST:R/PROT command has not been completed when the 1-hour duration is reached, the current flight validation batch is placed into the abnormality flow.

Step 6): Executing an ST:V/PROT/ACT command to determine whether the ST:V/PROT/ACT command is executed successfully. If a response from the ICS system is *ACCEPTED,* it means that the ST:V/PROT/ACT command is executed successfully, and the process proceeds to step 7); or otherwise, the current flight validation batch is placed into the abnormality flow.

Step 7): Executing an SCQ:master office command to determine whether the ST: V/PROT/ACT command is completed. A specific determination process is described below.
a) If a content returned by the ICS system includes *NO SCHEDULE CHANGE ACTIVE FOR OFFICE-xxx,* where xxx represents a specific office number, it indicates that the ST:V/PROT/ACT command is completed, and the current flight validation batch is validated successfully.
b) If the content returned by the ICS system includes *POSSIBLE SYSTEM ERROR, PLEASE* CONTACT *HELP DESK,* it indicates that ST:RT fails, then the ST:VT command is written to the ICS by the system, and step 7) is repeated. It should be noted that the ST:VT command may be executed twice at most. If the condition for executing the ST:VT command is met again after the ST:VT command has been executed twice cumulatively, the step 7) is repeated.
c) If none of the above two cases a) and b) appears, step 7) is repeated. It should be noted that when the ICS system executes the command, a repetition frequency and duration for the command execution may be set based on an actual situation. For example, a current repetition frequency of the ICS system is set to 2 times per second, and the duration is set to 1 hour. If the ST:V/PROT/ACT command has not been completed when the 1-hour duration is reached, the current flight validation batch is placed into the abnormality flow.

It should be noted that the placing into the abnormality flow described in step 1) to step 7) may indicates adding the current flight validation batch to the tail of the corresponding validation queue.

In S206, the currently acquired flight validation batch is validated successfully.

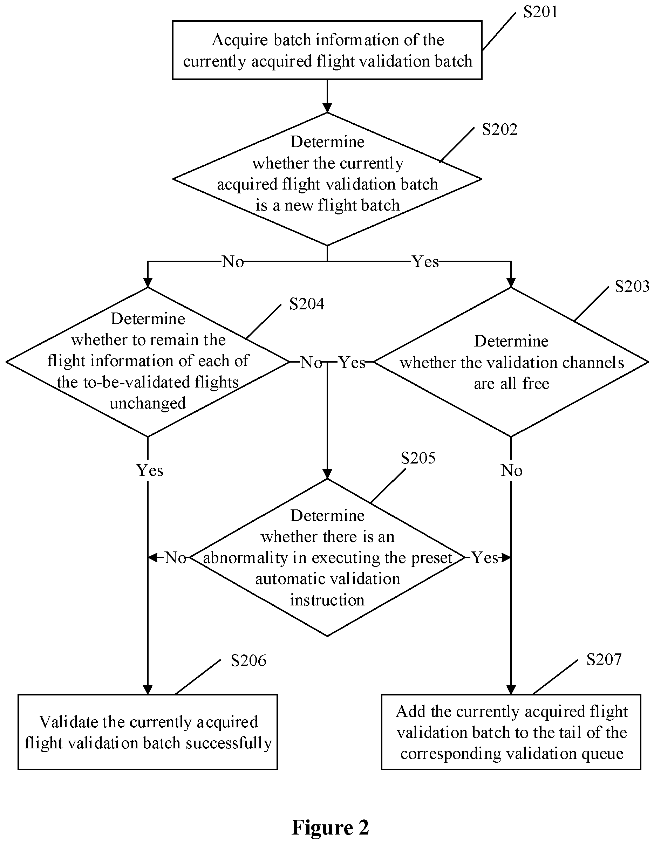

In the method according to an embodiment of the present disclosure, if the currently acquired flight validation batch is validated successfully, it indicates that all of the to-be-validated flights in the flight validation batch are validated successfully. The process shown in Figure 2 is performed on the next acquired flight validation batch repeatedly, until there is no flight validation batch in the validation queue.

In S207, the currently acquired flight validation batch is added to the tail of the corresponding validation queue.

In the method according to an embodiment of the present disclosure, any flight validation batch with an abnormality in executing the preset automatic validation instruction or any flight validation batch with an abnormality in executing the preset polling instruction is added to the tail of the corresponding validation queue. If the currently acquired flight validation batch is placed into the abnormality flow, the flight validation batch is marked with an abnormality-in-validation flag, and the flight validation batch is added to the tail of the corresponding validation queue. It should be noted that in S205, the flight validation batch placed into the abnormality flow mentioned in step 1) to step 7) may refer to marking the flight validation batch with the abnormality-in-validation flag, so as to make it easier for the staff to query for a flight validation batch in abnormality based on the abnormality-in-validation flag, and modify the flight information of the flight validation batch in abnormality. The validation process for the flight validation batches terminates when there is no flight validation batch in all the validation queues.

In the method according to an embodiment of the present disclosure, the currently to-be-validated flights are grouped and batched to generate validation batches, and the validation batches are added to pre-created validation queues. The validation batches are acquired from the validation queue. For each of the validation batches, it is determined whether flight information of the validation batch is consistent with flight information in preset flight data. If the flight information of the validation batch is not consistent with the flight information in preset flight data, a flight change type for the current validation batch is further determined and a flight validation instruction is executed based on the flight change type. If there is an abnormality in executing the flight validation instruction, the validation batch is added to the tail of the corresponding validation queue. If there is no abnormality in executing the flight validation instruction, the validation batch is validated successfully. With the method provided in the embodiment of the present disclosure, the ICS system can dynamically adjust a sequence of the to-be-validated flights, thereby improving a utilization rate of validation channels in the ICS system and improving an efficiency of the system in adjusting the flight validation.

In the method according to an embodiment of the present disclosure, after acquiring flight validation batches in validation queues, another validation process for flight validation batches is further provided in the present disclosure and may be performed as follows.

A flight validation batch is acquired from a validation queue, flight information of each of the to-be-validated flights in the flight validation batch is determined, and it is determined whether the flight information of each of the to-be-validated flights in the currently acquired flight validation batch is all consistent with corresponding preset flight information.

In a case where the flight information of each of the to-be-validated flights in the flight validation batch is all consistent with corresponding preset flight information, it is determined that the flight information of each of the to-be-validated flights in the flight validation batch is not to be changed, and the flight validation batch is validated successfully.

In a case where the flight information of some of the to-be-validated flights in the flight validation batch is to be changed, it is determined, based on batch information of the flight validation batch, whether the flight validation batch is a new flight batch.

In a case where the flight validation batch is a new flight batch, a preset polling instruction is executed to determine whether validation channels are all free, and if the validation channels are not all free, it is determined that there is an abnormality in executing the preset polling instruction, and the flight validation batch is added to the tail of the corresponding validation queue.

In a case where the validation channels are all free, a preset automatic validation instruction is executed and it is determined whether there is an abnormality in executing the preset automatic validation instruction. If there is an abnormality in executing the preset automatic validation instruction, the flight validation batch is added to the tail of the corresponding validation queue. If there is no abnormality in executing the preset automatic validation instruction, it is determined that the flight validation batch is validated successfully.

In a case where the flight validation batch is not a new flight batch, it indicates that the flight information of some of the to-be-validated flights in the flight validation batch is to be changed, the preset automatic validation instruction is executed, and it is determined whether there is an abnormality in executing the preset automatic validation instruction. If there is an abnormality in executing the preset automatic validation instruction, the flight validation batch is added to the tail of the corresponding validation queue. If there is no abnormality in executing the preset automatic validation instruction, it is determined that the flight validation batch is validated successfully.

With the method provided in the embodiment of the present disclosure, the ICS system can dynamically adjust a sequence of the to-be-validated flights, thereby improving a utilization rate of the validation channels in the ICS system and improving an efficiency of the system in adjusting flight validation.

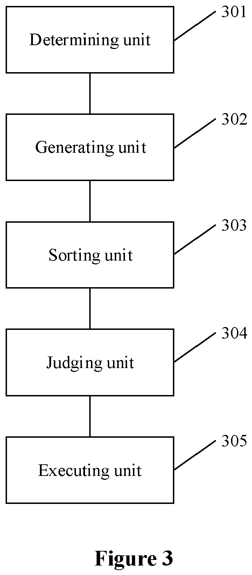

Corresponding to Figure 1, a validation adjustment apparatus for flight validation batches is further provided according to an embodiment of the present disclosure, so as to specifically implement the method in Figure 1. The validation adjustment apparatus for flight validation batches according to the embodiment of the present disclosure may be applied to computer terminals or various systems with computer servers. Figure 3 shows a schematic structural diagram of the apparatus, including a determining unit 301, a generating unit 302, a sorting unit 303, a judging unit 304, and an executing unit 305.

The determining unit 301 is configured to determine multiple currently to-be-validated flights and group, according to a preset grouping strategy, the multiple to-be-validated flights to generate multiple flight groups. Each of the flight groups includes at least one of the to-be-validated flights.

The generating unit 302 is configured to: for each of the flight groups, determine a validation priority of each of the to-be-validated flights in the flight group, and batch the to-be-validated flights with a same validation priority into a same flight validation batch, to generate multiple flight validation batches; and determine, for each of the flight validation batches, the validation priority of the to-be-validated flights in the flight validation batch as a validation priority of the flight validation batch.

The sorting unit 303 is configured to: for each of the flight groups, add the flight group into a pre-created validation queue corresponding to the flight group; and for each of the validation queues having added the flight groups, sort all the flight validation batches in the validation queue according to a preset priority sorting strategy, to determine sorted priorities of all the flight validation batches in the validation queue.

The judging unit 304 is configured to: for each of the validation queues having added the flight groups, acquire the flight validation batches from the validation queue sequentially according to the sorted priorities from high to low, and determine whether a currently acquired flight validation batch meets a condition for a preset automatic validation instruction.

The executing unit 305 is configured to: in a case where the currently acquired flight validation batch meets the condition for executing the preset automatic validation instruction, execute the preset automatic validation instruction, and determine whether there is an abnormality in executing the preset automatic validation instruction; add the currently acquired flight validation batch to a tail of the corresponding validation queue if it is determined that there is an abnormality in executing the preset automatic validation instruction; and determine that the currently acquired flight validation batch is validated successfully if it is determined that there is no abnormality in executing the preset automatic validation instruction.

With the apparatus according to an embodiment of the present disclosure, the currently to-be-validated flights are grouped and batched to generate validation batches, and the validation batches are added to pre-created validation queues. The flight validation batches are acquired from the validation queues. For each of the flight validation batches, it is determined whether the flight validation batch meets the condition for executing the preset automatic validation instruction. If the flight validation batch meets the condition for executing the preset automatic validation instruction, the preset automatic validation instructed is executed and it is determined whether there is an abnormality in executing the preset automatic validation instruction. If there is no abnormality in executing the preset automatic validation instruction, the flight validation batch is validated successfully. If there is an abnormality in executing the preset automatic validation instruction, the flight validation batch is added to the tail of the corresponding validation queue. With the apparatus provided in the embodiments of the present disclosure, the ICS system can dynamically adjust a sequence of the to-be-validated flights, thereby improving a utilization rate of validation channels in the ICS system and improving an efficiency of the system in adjusting the flight validation.

In an embodiment of the present disclosure, based on the foregoing embodiment, the determining unit 301 may include a first determining subunit and a grouping subunit.

The first determining subunit is configured to determine a master office for each of the to-be-validated flights.

The grouping subunit is configured to group, based on master offices for the to-be-validated flights, the to-be-validated flights with a same master office into a same group, to generate the flight groups corresponding to the master offices.

In an embodiment of the present disclosure, based on the foregoing embodiment, the sorting unit 303 may include a first adding subunit, a second determining subunit, and a sorting subunit.

The first adding subunit is configured to determine, for each of the flight groups, a master office for the flight group, and add the flight group into a validation queue corresponding to the master office.

The second determining subunit is configured to: for each of the validation queues having added the flight groups, determine a validation priority and generation time of each of the flight validation batches in the validation queue, and sort the flight validation batches according to the validation priority from high to low.

The sorting subunit is configured to: for the flight validation batches having a same validation priority, sort the flight validation batches having the same validation priority in a chronological order of the generation time, to determine the sorted priorities for all the flight validation batches in each of the validation queues having added the flight groups.

In an embodiment of the present disclosure, based on the foregoing embodiment, the judging unit 304 may include a first acquiring subunit, a first judging subunit, and a first executing subunit.

The first acquiring subunit is configured to acquire batch information of the currently acquired flight validation batch.

The first judging subunit is configured to determine, based on the batch information, whether the currently acquired flight validation batch is a new flight batch.

The first executing subunit is configured to: in a case where the currently acquired flight validation batch is a new flight batch, execute the preset polling instruction and determine whether there is an abnormality in executing the preset polling instruction; determine that the flight validation batch meets the condition for executing the preset automatic validation instruction if there is no abnormality in executing the preset polling instruction; and add the flight validation batch to the tail of the corresponding validation queue if there is an abnormality in executing the preset polling instruction.

In an embodiment of the present disclosure, based on the foregoing embodiment, the judging unit 304 may also include a second acquiring subunit, a second judging subunit, and a second executing subunit.

The second acquiring subunit is configured to acquire batch information of the currently acquired flight validation batch.

The second judging subunit is configured to determine, based on the batch information, whether the currently acquired flight validation batch is a new flight batch.

The second executing subunit is configured to: in a case where the currently acquired flight validation batch is not a new flight, determine, for each of the to-be-validated flights in the currently acquired flight validation batch, flight information of the to-be-validated flight and compare the flight information of the to-be-validated flight with corresponding preset flight information, to determine whether the flight information of each of the to-be-validated flights in the currently acquired flight validation batch is consistent with the corresponding preset flight information; determine that the flight validation batch is validated successfully if the flight information of each of the to-be-validated flights in the currently acquired flight validation batch is consistent with the corresponding preset flight information; and determine that the currently acquired flight validation batch meets the condition for executing the preset automatic validation instruction if there is at least one of the to-be-validated flights in the currently acquired flight validation batch whose flight information is not consistent with the corresponding preset flight information.

The embodiments in this specification are described in a progressive manner, the same or similar parts among the embodiments may be referred to each other, and each of the embodiments emphasizes the differences between the embodiment and other embodiments. In particular, a system or system embodiment is described in a relatively simple manner as it is basically similar to the method embodiment, and reference may be made to a part of the description of the method embodiment for related description of the system or system embodiment. The system and system embodiments described above are merely illustrative, where the units described as separate components may or may not be physically separate, and the components displayed as units may or may not be physical units, that is, the components may be located in one place, or may be distributed to multiple network units. Some or all of the modules may be selected based on actual needs to achieve the objectives of the solutions of the embodiments. Those of ordinary skill in the art may understand and implement the present disclosure without any creative effort.

It may be further understood by those skilled in the art that units and algorithm steps described in combination with the disclosed embodiments may be implemented by electronic hardware, computer software or a combination thereof. In order to clearly describe interchangeability of the hardware and the software, the units and the steps are generally described above in view of their functions. Whether the functions being implemented by the hardware or by the software depends on special applications of the technical solution and design constraint conditions. Those skilled in the art may use different methods for each particular application to implement the described functions, but such implementation should not be considered as going beyond the scope of the present disclosure.

The description of the embodiments disclosed herein enables those skilled in the art to implement or use the present disclosure. Various modifications to these embodiments are apparent for those skilled in the art. The general principles defined herein may be applied to other embodiments without departing from the spirit or scope of the present disclosure. Therefore, the present disclosure is not limited to the embodiments illustrated herein, but is to conform to the widest scope consistent with the principles and novel features disclosed herein.

## Claims

1. A validation adjustment method for flight validation batches, comprising:
determining a plurality of currently to-be-validated flights, and grouping, according to a preset grouping strategy, the plurality of to-be-validated flights to generate a plurality of flight groups, wherein each of the plurality of flight groups comprises at least one of the to-be-validated flights;
for each of the flight groups,
determining a validation priority of each of the to-be-validated flights in the fight group,
batching the to-be-validated flights with a same validation priority into a same flight validation batch, to generate a plurality of flight validation batches, and
determining, for each of the flight validation batches, the validation priority of the to-be-validated flights in the flight validation batch as a validation priority of the flight validation batch;
for each of the flight groups, adding the flight group into a pre-created validation queue corresponding to the flight group, and
for each of validation queues having added the flight groups,
sorting all the flight validation batches in the validation queue according to a preset priority sorting strategy, and
determining sorted priorities of all the flight validation batches in the validation queue;
for each of the validation queues having added the flight groups,
acquiring the flight validation batches from the validation queue sequentially according to the sorted priorities from high to low, and determining whether a currently acquired flight validation batch meets a condition for a preset automatic validation instruction; and
in a case where the currently acquired flight validation batch meets the condition for executing the preset automatic validation instruction,
executing the preset automatic validation instruction, and determining whether there is an abnormality in executing the preset automatic validation instruction;
adding the currently acquired flight validation batch to a tail of the validation queue if it is determined that there is an abnormality in executing the preset automatic validation instruction; and
determining that the currently acquired flight validation batch is validated successfully if it is determined that there is no abnormality in executing the preset automatic validation instruction.

2. The method according to claim 1, wherein the grouping, according to a preset grouping strategy, the plurality of to-be-validated flights to generate a plurality of flight groups comprises:
determining a master office for each of the to-be-validated flights; and
grouping, based on master offices for the to-be-validated flights, the to-be-validated flights with a same master office into a same group, to generate the flight groups corresponding to the master offices.

3. The method according to claim 2, wherein for each of the flight groups, adding the flight group into a pre-created validation queue corresponding to the flight group, and for each of validation queues having added the flight groups, sorting all the flight validation batches in the validation queue according to a preset priority sorting strategy, and determining sorted priorities of all the flight validation batches in the validation queue comprises:
for each of the flight groups, determining a master office for the flight group and adding the flight group into a validation queue corresponding to the master office;
for each of the validation queues having added the flight groups,
determining a validation priority and generation time for each of the flight validation batches in the validation queue,
sorting the flight validation batches according to the validation priority from high to low,
sorting, for the flight validation batches having a same validation priority, the flight validation batches having the same validation priority in a chronological order of the generation time, to determine the sorted priorities of all the flight validation batches in the validation queue.

4. The method according to claim 1, wherein the determining whether a currently acquired flight validation batch meets a condition for a preset automatic validation instruction comprises:
acquiring batch information of the currently acquired flight validation batch;
determining, based on the batch information, whether the currently acquired flight validation batch is a new flight batch; and
in a case where the currently acquired flight validation batch is the new flight batch,
executing a preset polling instruction, and determining whether there is an abnormality in executing the preset polling instruction,
determining that the flight validation batch meets the condition for executing the preset automatic validation instruction if there is no abnormality in executing the preset polling instruction, and
adding the flight validation batch to the tail of the validation queue if there is an abnormality in executing the preset polling instruction.

5. The method according to claim 1, wherein the determining whether a currently acquired flight validation batch meets a condition for a preset automatic validation instruction comprises:
acquiring batch information of the currently acquired flight validation batch;
determining, based on the batch information, whether the currently acquired flight validation batch is a new flight batch; and
in a case where the currently acquired flight validation batch is not a new flight batch,
for each of the to-be-validated flights in the currently acquired flight validation batch, determining flight information of the to-be-validated flight, and comparing the flight information of the to-be-validated flight with corresponding preset flight information, to determine whether the flight information of each of the to-be-validated flights in the currently acquired flight validation batch is consistent with the corresponding preset flight information;
determining that the flight validation batch is validated successfully, if the flight information of each of the to-be-validated flights in the currently acquired flight validation batch is consistent with the corresponding preset flight information, and
determining that the currently acquired flight validation batch meets the condition for executing the preset automatic validation instruction, if there is at least one of the to-be-validated flights in the currently acquired flight validation batch whose flight information is not consistent with the corresponding preset flight information.

6. A validation adjustment apparatus for flight validation batches, comprising:
a determining unit, configured to determine a plurality of currently to-be-validated flights, and group, according to a preset grouping strategy, the plurality of to-be-validated flights to generate a plurality of flight groups, wherein each of the plurality of flight groups comprises at least one of the to-be-validated flights;
a generating unit, configured to:
for each of the flight groups,
determine a validation priority of each of the to-be-validated flights in the fight group,
batch the to-be-validated flights with a same validation priority into a same flight validation batch, to generate a plurality of flight validation batches, and
determine, for each of the flight validation batches, the validation priority of the to-be-validated flights in the flight validation batch as a validation priority of the flight validation batch;
a sorting unit, configured to:
for each of the flight groups, add the flight group into a pre-created validation queue corresponding to the flight group, and
for each of validation queues having added the flight groups,
sort all the flight validation batches in the validation queue according to a preset priority sorting strategy, and
determine sorted priorities of all the flight validation batches in the validation queue;
a judging unit, configured to:
for each of the validation queues having added the flight groups,
acquire the flight validation batches from the validation queue sequentially according to the sorted priorities from high to low, and determine whether a currently acquired flight validation batch meets a condition for a preset automatic validation instruction; and
an executing unit, configured to:
in a case where the currently acquired flight validation batch meets the condition for executing the preset automatic validation instruction,
execute the preset automatic validation instruction, and determine whether there is an abnormality in executing the preset automatic validation instruction;
add the currently acquired flight validation batch to a tail of the validation queue if it is determined that there is an abnormality in executing the preset automatic validation instruction; and
determine that the currently acquired flight validation batch is validated successfully if it is determined that there is no abnormality in executing the preset automatic validation instruction.

7. The apparatus according to claim 6, wherein the determining unit comprises:
a first determining subunit, configured to determine a master office for each of the to-be-validated flights; and
a grouping subunit, configured to group, based on master offices for the to-be-validated flights, the to-be-validated flights with a same master office into a same group, to generate the flight groups corresponding to the master offices.

8. The apparatus according to claim 7, wherein the sorting unit comprises:
a first adding subunit, configured to: for each of the flight groups, determine a master office for the flight group and add the flight group into a validation queue corresponding to the master office;
a second determining subunit, configured to:
for each of the validation queues having added the flight groups,
determine a validation priority and generation time of each of the flight validation batches in the validation queue, and
sort the flight validation batches according to the validation priority from high to low; and
a sorting subunit, configured to sort, for the flight validation batches having a same validation priority, the flight validation batches having the same validation priority in a chronological order of the generation time, to determine the sorted priorities of all the flight validation batches in the validation queue.

9. The apparatus according to claim 6, wherein the judging unit comprises:
a first acquiring subunit, configured to acquire batch information of the currently acquired flight validation batch;
a first judging subunit, configured to determine, based on the batch information, whether the currently acquired flight validation batch is a new flight batch; and
a first executing subunit, configured to:
in a case where the currently acquired flight validation batch is the new flight batch,
execute a preset polling instruction, and determine whether there is an abnormality in executing the preset polling instruction,
determine that the flight validation batch meets the condition for executing the preset automatic validation instruction if there is no abnormality in executing the preset polling instruction, and
add the flight validation batch to the tail of the validation queue if there is an abnormality in executing the preset polling instruction.

10. The apparatus according to claim 6, wherein the judging unit comprises:
a second acquiring subunit, configured to acquire batch information of the currently acquired flight validation batch;
a second judging subunit, configured to determine, based on the batch information, whether the currently acquired flight validation batch is a new flight batch; and
a second executing subunit, configured to:
in a case where the currently acquired flight validation batch is not a new flight batch,
for each of the to-be-validated flights in the currently acquired flight validation batch, determine flight information of the to-be-validated flight, and compare the flight information of the to-be-validated flight with corresponding preset flight information, to determine whether the flight information of each of the to-be-validated flights in the currently acquired flight validation batch is consistent with the corresponding preset flight information;
determine that the flight validation batch is validated successfully, if the flight information of each of the to-be-validated flights in the currently acquired flight validation batch is consistent with the corresponding preset flight information, and
determine that the currently acquired flight validation batch meets the condition for executing the preset automatic validation instruction, if there is at least one of the to-be-validated flights in the currently acquired flight validation batch whose flight information is not consistent with the corresponding preset flight information.
